# EUROPEAN PATENT APPLICATION

(11) **EP 4 657 971 A2**
(43) Date of publication of application: **03.12.2025**
(21) Application number: 25201297.6
(22) Date of filing: 30.09.2022
(51) Int. Cl.: H04W 84/06

(54) **METHOD FOR PROVIDING COMMUNICATION SERVICES TO A USER EQUIPMENT USING AN ACCESS NETWORK OF OR ASSOCIATED WITH A MOBILE COMMUNICATION NETWORK, USER EQUIPMENT, SYSTEM OR MOBILE COMMUNICATION NETWORK, COVERAGE INFORMATION ENTITY OR FUNCTIONALITY, PROGRAM AND COMPUTER-READABLE MEDIUM**

(62) Divisional of application: 22199160.7
(71) Applicant: Deutsche Telekom AG, 53113 Bonn (DE)
(72) Inventor: KLATT, Axel, 50999 Köln (DE)
(74) Representative: Kutzenberger Wolff & Partner

(57) **Abstract**

The invention relates to a method for providing communication services to a user equipment using an access network of or associated with a mobile communication network, wherein the access network is or at least comprises a part corresponding to or being a non-terrestrial network, wherein the user equipment is able to be connected to or served by a base station entity being part of that non-terrestrial network or that non-terrestrial network part of the access network,
wherein the user equipment, while being located in or near a specific geographical coverage area, is able or has a high likelihood to be able to be connected to or to be served by at least one further base station entity, the at least one further base station entity being part of a terrestrial access network of or associated with a further mobile communication network or of or associated with the mobile communication network, wherein coverage information indicates the specific geographical coverage area of the at least one further base station entity or of the terrestrial access network, the coverage information comprising at least one piece of coverage parameter information,
wherein, in order to provide communication services to the user equipment, the method comprises the following steps:
-- in a first step, while the user equipment being connected to or served by the base station entity and the base station entity having the coverage information, at least the coverage parameter information is transmitted, by the base station entity, to the user equipment,
the coverage information and a location information of the user equipment being used to detect whether the user equipment is currently located or will subsequently be located in or near the specific geographical coverage area,
-- in a second step, the user equipment changes or is changed from being connected to or served by the base station entity to being connected to or served by the at least one further base station entity or the terrestrial access network using the at least one piece of coverage parameter information.

## Description

### BACKGROUND

The present invention relates a method for providing communication services to a user equipment using an access network of or associated with a mobile communication network, wherein the access network is or at least comprises a part corresponding to or being a non-terrestrial network,
wherein the user equipment, while being located in or near a specific geographical coverage area, is able or has a high likelihood to be able to be connected to or to be served by at least one further base station entity, the at least one further base station entity being part of a terrestrial access network of or associated with a further mobile communication network or of or associated with the mobile communication network.

Furthermore, the present invention relates to a user equipment for being provided with communication services, using an access network of or associated with a mobile communication network, wherein the access network is or at least comprises a part corresponding to or being a non-terrestrial network,
wherein the user equipment, while being located in or near a specific geographical coverage area, is able or has a high likelihood to be able to connect to or to be served by at least one further base station entity, the at least one further base station entity being part of a terrestrial access network of or associated with a further mobile communication network or of or associated with the mobile communication network.

Additionally, the present invention relates to a system or a mobile communication network for providing communication services to a user equipment using an access network of or associated with a mobile communication network, wherein the access network is or at least comprises a part corresponding to or being a non-terrestrial network,
wherein the user equipment, while being located in or near a specific geographical coverage area, is able or has a high likelihood to be able to be connected to or to be served by at least one further base station entity, the at least one further base station entity being part of a terrestrial access network of or associated with a further mobile communication network or of or associated with the mobile communication network.

Furthermore, the present invention relates to a coverage information entity or functionality as part of or assigned to or able to be accessed by (or accessible to) a system or a mobile communication network according to the present invention.

Furthermore, the present invention relates to a program and to a computer-readable medium for providing communication services to a user equipment using an access network of or associated with a mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network (and, hence, are also called terrestrial networks or TN-networks) are typically organized throughout a country (or a part of or a region within a country) in a repeating pattern of typically stationary (radio) cells (and associated base station entities) which typically belong to (or are used by or associated or assigned to) a mobile network operator (MNO). Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high altitude platforms or high altitude pseudo-satellites (HAPS). Such non-terrestrial networks, or networks, will allow global cellular (radio) coverage and interworking between terrestrial networks (TN) and the non-terrestrial network(s) (NTN). The main use case for non-terrestrial networks is to fill in radio coverage in areas (like remote regions and oceans) where there is no TN network coverage available.

Hence, regarding a situation of low (radio) coverage or absence of (radio) coverage (by a TN-network), a user equipment which is supportive of non-terrestrial networks would leave the coverage of the terrestrial network, and - based on standardized mobility procedures from PLMN selection, via cell reselection including equivalent public land mobile network to real handover, especially based on TN interworking with national roaming or inter-PLMN cross border mobility - the user equipment will eventually end up being connected to or being registered on the non-terrestrial network.
However, once a user equipment is connected to (or registered with or served by) the non-terrestrial network, such a user equipment typically performs periodic network selection attempts, i.e. attempts to look for a higher priority network, typically a public land mobile network. This periodic network selection attempts typically involve a so-called "background public land mobile network search" (cf. 3GPP TS 22.011, 3GPP TS 23.122) which is typically able to be controlled by a setting of an information (relating to the possible repetition time interval of such a search procedure) in the user equipment's universal integrated circuit card or module (or SIM card) and can vary from 6 minutes over a default of 60 min to 24 or even more hours.

However, performing such a background public land mobile network search or periodic network selection attempts typically require a comparatively high amount of energy, hence involves a comparatively high battery drain, especially for battery-powered devices or user equipments.

### SUMMARY

An object of the present invention is to provide a technically simple, effective and cost-effective solution for providing communication services to a user equipment such that such a user equipment, which is using (or connected to or served by) a non-terrestrial network, is able to switch to a home network (or, at least, higher priority network) once the user equipment is located (again) at a location (or in a geographical area) where coverage of such home network or higher priority network is available. A further object of the present invention is to provide a corresponding user equipment, system or mobile communication network, and a corresponding program and computer-readable medium.

The object of the present invention is achieved by a method for providing communication services to a user equipment using an access network of or associated with a mobile communication network, wherein the access network is or at least comprises a part corresponding to or being a non-terrestrial network, wherein the user equipment is able to be connected to or served by a base station entity being part of that non-terrestrial network or that non-terrestrial network part of the access network, wherein the user equipment, while being located in or near a specific geographical coverage area, is able or has a high likelihood to be able to be connected to or to be served by at least one further base station entity, the at least one further base station entity being part of a terrestrial access network of or associated with a further mobile communication network or of or associated with the mobile communication network, wherein coverage information indicates the specific geographical coverage area of the at least one further base station entity or of the terrestrial access network, the coverage information comprising at least one piece of coverage parameter information,
wherein, in order to provide communication services to the user equipment, the method comprises the following steps:
-- in a first step, while the user equipment being connected to or served by the base station entity and the base station entity having the coverage information, at least the coverage parameter information is transmitted, by the base station entity, to the user equipment,
   the coverage information and a location information of the user equipment being used to detect whether the user equipment is currently located or will subsequently be located in or near the specific geographical coverage area,
-- in a second step, the user equipment changes or is changed from being connected to or served by the base station entity to being connected to or served by the at least one further base station entity or the terrestrial access network using the at least one piece of coverage parameter information.

Especially by means of providing - to the user equipment - at least the coverage parameter information, it is advantageously possible according to the present invention to reduce the number of times or reduce the occasions where background public land mobile network searches or periodic network selection attempts are required and/or to reduce the extent of such searches for candidate public land mobile networks or radio cells. Hence, the associated or required amount of energy (to be used, by the considered user equipment, to perform such searches, especially background public land mobile network searches or periodic network selection attempts), especially provided by batteries, is able to be saved or avoided to be spent. Additionally, it might advantageously be possible to provide coverage in a more efficient manner and/or using less time to find the respective most suitable terrestrial network. Hence, according to the present invention, an optimization is proposed for the case of a user equipment roaming on a non-terrestrial (access) network.

According to the present invention, it is assumed that a considered user equipment is able to be connected to (or served by) a base station entity being part of a non-terrestrial network or a non-terrestrial network part of an access network of a mobile communication network - i.e. typically the user equipment has at all the capability to connect to a non-terrestrial network, the non-terrestrial network being also called, hereinafter, the mobile communication network. It is furthermore assumed that the considered user equipment, while being located in or near (or above) a specific geographical coverage area (or: in case it is located in or near or above the specific geographical coverage area), is able (or, at least, has a high likelihood to be able) to be connected to (or to be served by) at least one further base station entity, wherein the at least one further base station entity is part of a terrestrial access network of or associated with a further mobile communication network or of or associated with the mobile communication network - i.e. typically the terrestrial (access) network is also called, hereinafter, the further mobile communication network, especially as it typically is another mobile communication network (compared to the mobile communication network), i.e. typically operated by another network operator; however, it is not excluded, according to the present invention, that, at least in a certain part of the specific geographical coverage area, the terrestrial (access) network belongs to or is part of the mobile communication network/NTN network and/or has (or is operated by) the same operator.
Of course, the specific geographical coverage area does not necessarily correspond to one continuous (or contiguous or joining) area or surface; it is simply meant to designate a multitude (or a set) of points or positions or locations where the considered user equipment would typically have (a high likelihood of having) connectivity to or coverage by the further mobile communication network.
Information about this (or relating to this) specific geographical coverage area are referred to, in the context of the present invention, as coverage information. The coverage information (as a whole) especially indicates the specific geographical coverage area; thereby the coverage information might be comprised of different pieces of coverage information, e.g. indicating geographical points or positions or locations where a user equipment would typically have (a high likelihood of having) connectivity to or coverage by the further mobile communication network, i.e. especially coverage through the at least one further base station entity or through another (further) base station entity of the terrestrial access network.
In addition to indicating the specific geographical coverage area, i.e. geographically indicating, the coverage information also comprises at least one piece of coverage parameter information. According to the present invention, the coverage parameter information is (or a plurality of pieces of coverage parameter information are) used to direct a user equipment (receiving this coverage information and/or this coverage parameter information) to use the coverage parameter information, e.g. a frequency information, in order to avoid to perform background public land mobile network searches or periodic network selection attempts.
As one example of the coverage parameter information, the coverage parameter information especially comprises frequency information (especially which frequency or which frequency band to use at which location) but additional information components might be part of the coverage parameter information as well. Especially, coverage parameter information in the form of frequency information is or are able to be used, by the user equipment, to be informed about a particular frequency or set of frequencies (i.e. by usage of ARFCN absolute reference frequency channel number), or frequency band (i.e. by a respective band number) of a broadcast (control) channel used by the at least one further base station entity (or by other (further) base station entities) of the terrestrial access network such that tuning the user equipment's receiver to such frequency is potentially able to avoid to perform background public land mobile network searches or periodic network selection attempts.
Hence, according to the present invention, in order to provide communication services to the (considered) user equipment, the method comprises the following steps:
-- in a first step, while the user equipment is (actually) connected to or served by the base station entity and the base station entity having the coverage information, at least the coverage parameter information is transmitted, by the base station entity, to the user equipment, the coverage information and a location information of the user equipment being used to detect whether the user equipment is currently located or will subsequently be located in or near the specific geographical coverage area,
**--** in a second step, the user equipment changes or is changed from being connected to or served by the base station entity to being connected to or served by the at least one further base station entity or the terrestrial access network using the at least one piece of coverage parameter information, i.e. based on the knowledge of the at least one piece of coverage parameter information, the (considered) user equipment.
According to the present invention, during the first step, the coverage information is at least available to the base station entity (i.e. the base station entity is having the coverage information), and the coverage information together with a location information of (or related to (the position or the location of)) the user equipment is used to detect whether the user equipment is currently located or will subsequently be located in or near the specific geographical coverage area; one alternative solution according to the present invention involves this detection to be performed or conducted in or by the base station entity in which case the base station entity needs to have some kind of location information related to the user equipment; according to another alternative solution according to the present invention, this detection is performed or conducted in or by the user equipment in which case the user equipment needs to have the coverage information (received from the base station entity), or at least part thereof which enables the user equipment - together with some kind of location information, e.g. obtained from a global navigation satellite system receiver as part of the user equipment - to detect whether the user equipment is currently located or will subsequently be located in or near the specific geographical coverage area.

The present invention is especially focused on low earth orbit (LEO) satellites or high altitude platform entities which typically are located up to 300 km until 1500 km above ground (especially 800 km to 1000 km).

According to the present invention, it is advantageously possible and preferred that the coverage information is obtained from a coverage information entity or functionality, wherein, in order to obtain the coverage information, the base station entity retrieves the coverage information from the coverage information entity or functionality, preferably either prior to the user equipment being connected to or served by the base station entity, or during the user equipment being connected to or served by the base station entity.

It is thereby advantageously possible that the base station entity is able to be provided with the coverage information in a comparatively easy and efficient manner; especially the coverage information entity or functionality corresponds to or exposes an interface of a network function or service within the mobile communication network (especially the core network thereof), wherein the coverage information entity or functionality exposes its functionality or service (to provide coverage information upon a request received, e.g., from the base station entity) through a service based interface (SBI), which especially employs a well-defined REST interface using HTTP/2. The coverage information entity or functionality could be realized as a cloudified network function similar to other network functions in the 3GPP service-based architecture (SBA).

According to the present invention, it is advantageously furthermore possible and preferred that, especially as part of the first step, the coverage information is used by the base station entity or by the user equipment to detect whether the user equipment is currently located or will subsequently be located in or near the specific geographical coverage area, wherein, based on the coverage information, a coverage indication information is
-- determined by the base station entity and transmitted to the user equipment, or
-- determined by the user equipment,
wherein the coverage indication information comprises the indication, regarding at least one position of the user equipment, whether the user equipment is located in or near the specific geographical coverage area, wherein the coverage indication information especially refers
-- to a current position of the user equipment and, hence, a current point in time and/or
-- to an expected future position of the user equipment and a future point in time,
and wherein the coverage indication information especially comprises at least one piece of coverage parameter information.

It is thereby advantageously possible to easily and efficiently implement the present invention.

According to the present invention, it is furthermore advantageously possible and preferred that, especially as part of the first step, the location information of the user equipment corresponds to a location information corresponding to or indicating one of the current position of the user equipment and an expected future position of the user equipment is either
-- transmitted, by the user equipment, to the base station entity and/or the access network, or
-- generated or otherwise obtained by the base station entity and/or the access network,
wherein the base station entity determines, based on the coverage information, that the one of the current position of the user equipment and the expected future position of the user equipment corresponds to the specific geographical coverage area, wherein the base station entity transmits, to the user equipment, a mobility procedure information, the mobility procedure information especially comprising the coverage parameter information, wherein the mobility procedure information indicates or prescribes, to the user equipment,
-- to perform a cell selection operation in order to be served by the further base station entity and/or
-- to modify the equivalent public land mobile network configuration such that the further base station entity serves the user equipment and/or
-- to perform a handover operation towards the further base station entity.

It is thereby advantageously possible according to the present invention that the base station entity serving the considered user equipment only needs to be provided with a location information of the user equipment (or needs to somehow generate or determine such a location information), and is able, based on the coverage information, to determine whether the user equipment is likely to have coverage provided by the further base station entity; in such a situation, the base station entity is able to indicate or to prescribe, to the user equipment, to perform a mobility procedure by means of transmitting a mobility procedure information. In this case, the mobility procedure information comprises the coverage parameter information, especially a frequency information indicating which frequency or frequency band to use in order to be connected to (or to be served by) the at least one further base station entity or the terrestrial access network. Hence again, the coverage parameter information (or at least one piece of coverage parameter information), being transmitted to the user equipment (e.g. as part of the mobility procedure information), serves the user equipment to connect to or to be served by the at least one further base station entity without having to conduct background public land mobile network searches or periodic network selection attempts.

Furthermore, it is advantageously possible and preferred according to the present invention that, especially as part of the first step, the base station entity transmits the coverage information, or a part thereof, to the user equipment, the coverage information or part thereof indicating the specific geographical coverage area of the at least one further base station entity or of the terrestrial access network,
wherein the user equipment determines, based on the coverage information or part thereof, received from the base station entity, that one of the current position of the user equipment and an expected future position of the user equipment corresponds to the specific geographical coverage area,
wherein the at least one piece of coverage parameter information is used, by the user equipment, to perform a mobility operation, especially to connect to or to register with the at least one further base station entity or the terrestrial access network.

Thereby, it is advantageously possible that the detection whether the user equipment is currently located or will subsequently be located in or near the specific geographical coverage area is performed or conducted by the user equipment (instead of by the base station entity). This, of course, requires the coverage information (or at least a part thereof) to be transmitted, by the base station entity, to the user equipment (i.e. the coverage information or at least a part thereof is received by the user equipment). Again, a coverage parameter information (or at least one piece of coverage parameter information) is part of the coverage information transmitted to the user equipment such that the user equipment is able to connect to or to be served by the at least one further base station entity without having to conduct background public land mobile network searches or periodic network selection attempts.

Furthermore, the present invention relates to a user equipment for being provided with communication services, using an access network of or associated with a mobile communication network, wherein the access network is or at least comprises a part corresponding to or being a non-terrestrial network, wherein the user equipment is able to be connected to or served by a base station entity being part of that non-terrestrial network or that non-terrestrial network part of the access network,
wherein the user equipment, while being located in or near a specific geographical coverage area, is able or has a high likelihood to be able to connect to or to be served by at least one further base station entity, the at least one further base station entity being part of a terrestrial access network of or associated with a further mobile communication network or of or associated with the mobile communication network,
wherein coverage information indicates the specific geographical coverage area of the at least one further base station entity or of the terrestrial access network, the coverage information comprising at least one piece of coverage parameter information,
wherein, in order for the user equipment to be provided with communication services, the user equipment is configured such that:
   -- while the user equipment being connected to or served by the base station entity and the base station entity having the coverage information, the user equipment receives, at least the coverage parameter information from the base station entity,
the coverage information and a location information of the user equipment being able to be used to detect whether the user equipment is currently located or will subsequently be located in or near the specific geographical coverage area,
   -- the user equipment changes or is changed from being connected to or served by the base station entity to being connected to or served by the at least one further base station entity or the terrestrial access network using the at least one piece of coverage parameter information.

It is thereby advantageously possible to realize the present invention using a corresponding user equipment.

Furthermore, it is advantageously possible and preferred according to the present invention, especially with regard to the inventive user equipment, that the location information of the user equipment is transmitted, by the user equipment, to the base station entity, the location information corresponding to or indicating one of the current position of the user equipment and an expected future position of the user equipment, and the location information being transmitted in view of determining, especially based on the coverage information, that the one of the current position of the user equipment and the expected future position of the user equipment corresponds to the specific geographical coverage area, wherein the user equipment receives, from the base station entity, a mobility procedure information, the mobility procedure information especially comprising the coverage parameter information, the mobility procedure information indicating or prescribing, to the user equipment,
-- to perform a cell selection operation in order to be served by the further base station entity and/or
-- to modify the equivalent public land mobile network configuration such that the further base station entity serves the user equipment and/or
-- to perform a handover operation towards the further base station entity.

It is thereby advantageously possible to realize the present invention using a corresponding user equipment wherein the base station entity detects whether the user equipment is currently located or will subsequently be located in or near the specific geographical coverage area.
Especially according to this embodiment of the present invention, the transmission of the location information of the user equipment to the base station entity might occur as part of the mandatorily required support of GNSS capabilities in an non-terrestrial network(-capable) user equipment which will send the user equipment geographical location information to the non-terrestrial network access network or the base station entity (or satellite) during the registration and any connection establishment phase (according to 3GPP TS 38.300). This indication of the GNSS position (of the user equipment) is used (by the base station entity of the non-terrestrial access network) to verify that the user equipment is actually allowed to access the non-terrestrial access network from where it is on the ground (as satellite services might not be allowed on all countries and a distinction between country border is required as well).

Furthermore, it is advantageously possible and preferred according to the present invention, especially with regard to the inventive user equipment, that the user equipment receives, from the base station entity, the coverage information, or a part thereof, the coverage information or part thereof indicating the specific geographical coverage area of the at least one further base station entity or of the terrestrial access network,
wherein the user equipment determines, based on the coverage information or part thereof, received from the base station entity, that one of the current position of the user equipment and an expected future position of the user equipment corresponds to the specific geographical coverage area,
wherein the at least one piece of coverage parameter information is used, by the user equipment, to perform a mobility operation, especially to connect to or to register with the at least one further base station entity or the terrestrial access network.

It is thereby advantageously possible to realize the present invention using a corresponding user equipment wherein the user equipment itself detects whether the user equipment is currently located or will subsequently be located in or near the specific geographical coverage area.

Furthermore, the present invention relates to a system or mobile communication network for providing communication services to a user equipment using an access network of or associated with a mobile communication network, wherein the access network is or at least comprises a part corresponding to or being a non-terrestrial network, wherein the user equipment is able to be connected to or served by a base station entity being part of that non-terrestrial network or that non-terrestrial network part of the access network,
wherein the user equipment, while being located in or near a specific geographical coverage area, is able or has a high likelihood to be able to be connected to or to be served by at least one further base station entity, the at least one further base station entity being part of a terrestrial access network of or associated with a further mobile communication network or of or associated with the mobile communication network,
wherein coverage information indicates the specific geographical coverage area of the at least one further base station entity or of the terrestrial access network, the coverage information comprising at least one piece of coverage parameter information,
wherein, in order to provide communication services to the user equipment, the system or mobile communication network is configured such that:
   -- while the user equipment being connected to or served by the base station entity and the base station entity having the coverage information, at least the coverage parameter information is transmitted, by the base station entity, to the user equipment,
      the coverage information and a location information of the user equipment being used to detect whether the user equipment is currently located or will subsequently be located in or near the specific geographical coverage area,
   -- the user equipment changes or is changed from being connected to or served by the base station entity to being connected to or served by the at least one further base station entity or the terrestrial access network using the at least one piece of coverage parameter information.

Furthermore, the present invention relates to a coverage information entity or functionality as part of or assigned to or able to be accessed by (or accessible to) a system or a mobile communication network according to the present invention, the coverage information entity or functionality especially being realized as a cloudified network function in the 3GPP service-based architecture (SBA).

Additionally, the present invention relates to a program comprising a computer readable program code which, when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

Still additionally, the present invention relates to a computer-readable medium comprising instructions which when executed on a computer and/or on a user equipment and/or on a network node of a mobile communication network, or in part on a user equipment and/or in part on network node of a mobile communication network, causes the computer and/or the user equipment and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

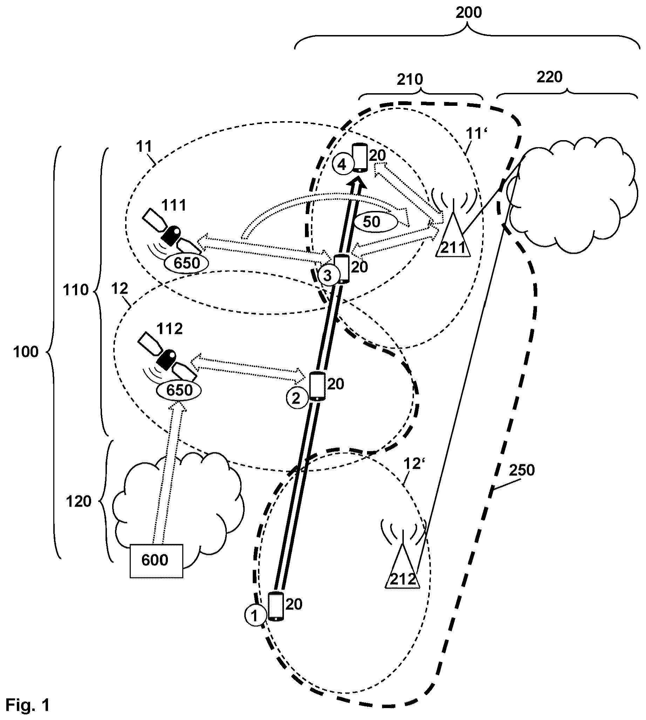

Figure 1 schematically illustrates the situation of a user equipment in a mobile communication network being a non-terrestrial network or at least comprising a part corresponding to a non-terrestrial network, wherein the user equipment, while being located in or near a specific geographical coverage area, is able or has a high likelihood to be able to be connected to or to be served by at least one further base station entity being part of a terrestrial access network of or associated with a further mobile communication network.

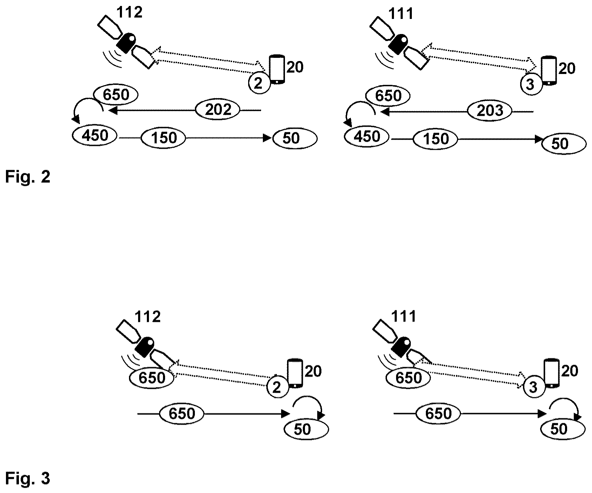

Figure 2 schematically illustrates the communication between the user equipment and a base station entity of a non-terrestrial network, wherein the detection whether the user equipment is currently located or will subsequently be located in or near the specific geographical coverage area is performed by the base station entity of the non-terrestrial network.
Figure 3 schematically illustrates the communication between the user equipment and a base station entity of a non-terrestrial network, wherein the detection whether the user equipment is currently located or will subsequently be located in or near the specific geographical coverage area is performed by the user equipment.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a mobile communication network 100 exemplarily travelling or moving along a path indicated by means of a drawn-through (bold) arrow and positional indications being designated by means of reference signs 1, 2, 3 and 4, these positional indications being intended to schematically show different positions (or locations) of the user equipment 20 - a first position or location 1 of the user equipment 20, a second position or location 2 of the user equipment 20, a third position or location 3 of the user equipment 20 and a fourth position or location 4 of the user equipment 20 - along its moving or travelling path. The moving or travelling path of the user equipment 20 is schematically represented, in Figure 1, by means of a straight line (or arrow), however this representation has been chosen only for the sake of simplicity; it is, of course, possible, and will in practice typically be the case, that the user equipment 20 moves or may move along a curved or otherwise non-straight path. In the context of the present invention, he user equipment 20 represented in Figure 1 is also called a considered user equipment or a specific user equipment; of course, further user equipments are typically present and connected to (and/or served by) the mobile communication network 100, however, again for the sake of simplicity, such further user equipments are not represented in Figure 1.

Figure 1 illustrates the situation of the user equipment 20 in a mobile communication network 100 either being a non-terrestrial network or, at least, comprising a part corresponding to a non-terrestrial network. The mobile communication network 100 comprises an access network 110 and a core network 120. The mobile communication network 100 is preferably a cellular telecommunications network comprising typically a plurality of network cells (or radio cells). The access network 110 is part of or associated with the mobile communication network 100, and the access network 110 is or at least comprises a part corresponding to or being a non-terrestrial network. The user equipment 20 is able to be connected to (or served by) a base station entity 111 being part of that non-terrestrial network or that non-terrestrial network part of the access network 110. Typically, the non-terrestrial access network 110 also comprises, besides the (first) base station entity 111, further base station entities, only one of which - a second base station entity 112 - is schematically shown in Figure 1. Each of the base station entities 111, 112 of the mobile communication network 100 (or of the non-terrestrial access network 110 thereof) serves a radio coverage area or radio cell, the (first) base station entity 111 serving a first radio cell 11, and the second base station entity 112 serving a second radio cell 12. In practice, such radio coverage areas or radio cells 11, 12 provided or generated by the base station entities 111, 112 of the non-terrestrial access network 110 might be earth-fixed (i.e. continuously covering the same geographical areas all the time, e.g. in case of geosynchronuous orbit satellites or high altitude platform coverage), quasi-earth-fixed (i.e. covering one geographical area for a limited period and a different geographical area during another period, e.g. in case of non-geosynchronuous orbit satellites or high altitude platform coverage using steerable beams) or earth-moving (i.e. the coverage area slides over the earth surface, e.g. in case of non-geosynchronuous orbit satellites or high altitude platform coverage using fixed or non-steerable beams), however this distinction is not especially relevant in the context of the present invention as it is assumed that radio coverage, provided by the non-terrestrial access network 110, is - at least in principle and while the user equipment 20 is located in areas where the non-terrestrial access network 110 is deployed - available to the user equipment 20, irrespective of exactly which one of the base station entities 111, 112 of the non-terrestrial access network 110 is serving the user equipment 20 at a considered point in time.

In the exemplary situation shown in Figure 1, the user equipment 20 is shown to be located (for some of the above mentioned positions or locations of the user equipment 20, namely for the first, third and fourth positions or locations 1, 3, 4 of the user equipment 20) in or near a specific geographical coverage area 250 where it is able or has a high likelihood to be able to be connected to or to be served by at least one further base station entity 211 being part, in the exemplary embodiment shown in Figure 1, of a terrestrial access network 210 of or associated with a further mobile communication network 200. The further mobile communication network 200 comprises, besides the terrestrial access network 210, a core network 220. Typically, the terrestrial access network 210 also comprises, besides the (first) base station entity 211, further base station entities, only one of which - a second further base station entity 212 - is schematically shown in Figure 1. Each of the further base station entities 211, 212 of the further mobile communication network 200 (or of the terrestrial access network 210 thereof) also serves a respective radio coverage area or radio cell, the (first) further base station entity 211 serving a third radio cell 11', and the second further base station entity 212 serving a fourth radio cell 12'.
The specific geographical coverage area 250 is meant to correspond to the combination of the radio coverage areas 11', 12' of the terrestrial access network 210 (or to comprise all the radio coverage areas 11', 12' of the terrestrial access network 210) - even though Figure 1 only shows the third and fourth radio cells 11', 12' for the sake of simplicity. The specific geographical coverage area 250 does not necessarily need to correspond to one continuous (or contiguous or joining) area or surface; it is simply meant to designate, or to refer to, a multitude (or a set) of points or positions or locations or areas where the considered user equipment 20 would typically have (a high likelihood of having) connectivity to or coverage by the further mobile communication network 200 if it were located at these locations or positions - which is the case, as schematically shown in Figure 1 for the considered user equipment 20, at its first, third, and fourth positions 1, 3, 4.
According to the present invention, by means of coverage information - available to the non-terrestrial access network 110 - it is possible to indicate the specific geographical coverage area 250 as well as access parameters of the terrestrial access network 210, i.e. especially of the at least one further base station entity 211, 212. Hence, this coverage information - in the Figures designated by means of reference sign 650 - not only comprises a geographical indication or geographical information of or relating to the specific geographical coverage area 250, but also at least one access parameter (but preferably a plurality of such access parameters) of the terrestrial access network 210, i.e. especially of the at least one further base station entity 211, 212. These access parameters are hereinafter also called coverage parameter information 50 or piece(s) of coverage parameter information 50.

The coverage information 650 is available to the non-terrestrial access network 110 - especially to the base station entities 111, 112 thereof - by means of a coverage information entity or functionality 600 being either part of the core network 120 of the mobile communication network 100 or, at least, accessible by that core network 120 or by the non-terrestrial access network 110 or its base station entities 111, 112. Especially the coverage information entity or functionality 600 corresponds to or exposes an interface of a network function or service within the mobile communication network 100 (especially the core network 120 thereof), wherein the coverage information entity or functionality 600 exposes its functionality or service (to provide coverage information 650 upon a request received, e.g., from one or a plurality of the base station entities 111, 112 of the non-terrestrial access network 110) through a service based interface (SBI), which especially employs a well-defined REST interface using HTTP/2.
Preferably, in order to obtain the coverage information 650, the base station entity 111 retrieves the coverage information 650 from the coverage information entity or functionality 600, preferably either prior to the user equipment 20 being connected to or served by the base station entity 111, or during the user equipment 20 being connected to or served by the base station entity 111; this is schematically represented, in Figure 1, by means of a dotted arrow directed from the coverage information entity or functionality 600 towards the coverage information 650 of the (second) base station entity 112.

As can be seen from Figure 1, the user equipment 20 is connected to or served by the further mobile communication network 200 (in this case using coverage provided by the second further (terrestrial) base station entity 212) while positioned at the first position or location 1 (as this is part of the specific geographical coverage area 250). The user equipment 20 could, typically, also be connected to or served by the mobile communication network 100 (via a non-terrestrial base station entity not represented in Figure 1) but as long as a terrestrial coverage is available to the user equipment 20, there would be no reason for the user equipment 20 to change to the mobile communication network 100 - especially due to the fact that being connected to or being served by the (non-terrestrial) mobile communication network 100 is typically more energy intensive from the perspective of the user equipment 20 than being connected to or being served by the (terrestrial) further mobile communication network 200. However, along its path of movement, the user equipment 20 leaves the specific geographical coverage area 250, and, hence, coverage from the terrestrial further mobile communication network 200: At its second position or location 2, the user equipment 20 is (necessarily, as there is no other coverage available) connected to or served by base station entity 111 and, hence, the non-terrestrial mobile communication network 100; this is schematically represented, in Figure 1, by means of a dotted two sided arrow between the user equipment 20 and the (second) base station entity 112. The same is true at its third position or location 3 (which is schematically represented, in Figure 1, by means of a dotted two sided arrow between the user equipment 20 and the (first) base station entity 111); however, at the third position or location 3, the user equipment 20 could (alternatively to having coverage provided by the non-terrestrial mobile communication network 100) have coverage provided by the terrestrial further mobile communication network 200 via its further base station entity 211; this is schematically represented, in Figure 1, by means of a dotted two sided arrow between the user equipment 20 and the further base station entity 211. By means of performing a background public land mobile network search or periodic network selection attempt, the user equipment 20 could, in principle, obtain corresponding access parameters to be connected to or served by the terrestrial further mobile communication network 200; however, this typically would require a comparatively high amount of energy.
According to the present invention in such a situation (i.e. while the user equipment 20 - at its second or at its third positions or locations 2, 3 - is connected to or served by the base station entity 111) at least the coverage parameter information 50 is transmitted, by the base station entity 111, to the user equipment 20, and the user equipment 20 changes or is changed from being connected to or served by the base station entity 111 to being connected to or served by the at least one further base station entity 211, 212 or the terrestrial access network 210 using the at least one piece of coverage parameter information 50; this change is schematically represented, in Figure 1, by means of a curved, dotted arrow directed from the base station entity 111 towards the further base station entity 211.
As a prerequisite, it is, of course, mandatory to detect that the user equipment 20 is in or near the specific geographical coverage area (250) indeed, i.e. the user equipment 20 is either currently located there - while being at its third position or location 3 - or the user equipment 20 will subsequently (or shortly) be located at its third position or location 3 - i.e. the user equipment 20, in this case, is actually at its second position or location 2 but it is possible to estimate that it will shortly be located at its third position or location 3. In order to detect that the user equipment 20 is in or near the specific geographical coverage area 250, the coverage information 650 is used as well as a location information of the user equipment 20. Different possibilities thereof are schematically represented in Figures 2 and 3 and explained in further detail hereafter.

Figure 2 schematically illustrates the communication between the user equipment 20 and the base station entities 111, 112 of the non-terrestrial mobile communication network 100, wherein the detection whether the user equipment 20 is currently located or will subsequently be located in or near the specific geographical coverage area 250 is performed by the base station entity 111, 112 of the non-terrestrial mobile communication network 100. On the left-hand side of Figure 2, the situation of the user equipment 20 being located or positioned at its second position or location 2 (and being connected or served by the second base station entity 112). On the right-hand side of Figure 2, the situation of the user equipment 20 being located or positioned at its third position or location 3 (and being connected or served by the first base station entity 111). In any case, in a first processing step (represented in both representations of Figure 2), a location information 202, 203 is transmitted, by the user equipment 20, to the respective base station entity 111, 112 of the non-terrestrial access network 110, and, in a second processing step, the respective base station entity 111, 112 transmits, to the user equipment 20, a mobility procedure information 150, the mobility procedure information 150 especially comprising the coverage parameter information 50. The mobility procedure information 150 especially indicates or prescribes, to the user equipment 20,
-- to perform a cell selection operation in order to be served by the further base station entity 211 and/or
-- to modify the equivalent public land mobile network configuration such that the further base station entity 211 serves the user equipment 20 and/or
-- to perform a handover operation towards the further base station entity 211.
The location information 202, 203 transmitted by the user equipment 20 in the first processing step either corresponds to the current position (especially the second or third positions or locations 2, 3) of the user equipment (in case the user equipment 20 is located at the second or third positions or locations 2, 3, i.e. if the user equipment 20 is located at the second position or location 2, it sends location information 202 indicating its current position or location, and if the user equipment 20 is located at the third position or location 3, it sends location information 203 indicating its current position or location). However, the location information transmitted by the user equipment 20 in the first processing step could, alternatively, also correspond to an expected future position (especially the third position or location 3 in case the user equipment 20 is located at the second position or location 2, or the fourth position or location 4 in case the user equipment 20 is located at the third position or location 3); however, this is not specifically represented in Figure 2.
A further alternative, neither shown in Figure 2, relates to the possibility that no location information is explicitly (or deliberately) transmitted, by the user equipment 20, to the corresponding base station entity 111, 112 in connection to or in view of the determination of whether the user equipment 20 reached the specific geographical coverage area 250: In such a case the corresponding base station entity 111, 112 may alternatively be able to generate or otherwise obtain a location information of or related to the user equipment 20.
According to all embodiments shown or hinted at in Figure 2, the base station entity 111 determines, based on the coverage information 650 (and based on the location information), that either the current position 2, 3 of the user equipment 20 (or alternatively the expected future position 3, 4 of the user equipment 20) corresponds to the specific geographical coverage area 250. As a consequence thereof, the base station entity 111 transmits, to the user equipment 20 and in the second processing step according to Figure 2, the mobility procedure information 150 comprising the coverage parameter information 50.
Especially (but not necessarily), especially as part of the first step according to the present invention, the coverage information 650 is used by the base station entity 111 to detect whether the user equipment 20 is currently located (or whether the user equipment 20 will subsequently be located) in or near the specific geographical coverage area 250, wherein, based on the coverage information 650, a coverage indication information 450 is determined by the base station entity 111, wherein the mobility procedure information 150, and, hence, the coverage parameter information 50, is derived from the coverage indication information 450.
Especially, the coverage indication information 450 comprises the indication, regarding at least one position 2, 3, 4 of the user equipment 20, whether the user equipment 20 is located in or near the specific geographical coverage area 250, wherein the coverage indication information 450 especially refers
**--** to a current position 2, 3 of the user equipment 20 (while the user equipment 20 is located at its second or third positions or locations 2, 3) and, hence, a current point in time and/or
-- to an expected future position 3, 4 of the user equipment 20 (again while the user equipment 20 is located at its second or third positions or locations 2, 3) and a future point in time. The coverage indication information 450 especially comprises at least one piece of coverage parameter information 50.

Figure 3 schematically illustrates the communication between the user equipment 20 and a base station entities 111, 112 of the non-terrestrial mobile communication network 100, wherein the detection whether the user equipment 20 is currently located or will subsequently be located in or near the specific geographical coverage area 250 is performed by the user equipment 20. On the left-hand side of Figure 3, the situation of the user equipment 20 being located or positioned at its second position or location 2 (and being connected or served by the second base station entity 112). On the right-hand side of Figure 3, the situation of the user equipment 20 being located or positioned at its third position or location 3 (and being connected or served by the first base station entity 111). In any case, in a third processing step (represented in both representations of Figure 3), especially as part of the first step according to the present invention, the base station entity 111 transmits the coverage information 650 (or at least a part thereof) to the user equipment 20. The coverage information 650 (or the part thereof transmitted to the user equipment 20) indicate the specific geographical coverage area 250 - at least in or relating to the approximate vicinity of the user equipment 20 - of the at least one further base station entity (211, 212) or of the terrestrial access network (210), and the user equipment 20 determines, based on the coverage information 650 (or the transmitted part thereof) received from the base station entity 111, that the current position 2, 3 of the user equipment 20 (or alternatively the expected future position 3, 4 of the user equipment 20) corresponds to the specific geographical coverage area 250. The at least one piece of coverage parameter information 50 (as part of the coverage information 650) is then used, by the user equipment 20, to perform a mobility operation, especially to connect to or to register with the at least one further base station entity 211, 212 or the terrestrial access network 210. Especially (but not necessarily), especially as part of the first step according to the present invention, the coverage information 650 is used by the user equipment 20 to detect whether the user equipment 20 is currently located (or whether the user equipment 20 will subsequently be located) in or near the specific geographical coverage area 250, wherein, based on the coverage information 650, a coverage indication information 450 (not shown in Figure 3) is determined by the user equipment 20, wherein the coverage parameter information 50, is derived from the coverage indication information 450. Especially, the coverage indication information 450 comprises the indication, regarding at least one position 2, 3, 4 of the user equipment 20, whether the user equipment 20 is located in or near the specific geographical coverage area 250, wherein the coverage indication information 450 especially refers
-- to a current position 2, 3 of the user equipment 20 (while the user equipment 20 is located at its second or third positions or locations 2, 3) and, hence, a current point in time and/or
-- to an expected future position 3, 4 of the user equipment 20 (again while the user equipment 20 is located at its second or third positions or locations 2, 3) and a future point in time. The coverage indication information 450 especially comprises at least one piece of coverage parameter information 50.

Hence, according to the present invention, an optimization is proposed for the case of a user equipment roaming on a non-terrestrial (access) network.
According to an advantageous embodiment according to the present invention, the following processing steps are performed by the user equipment 20, by the respective base station entity 111, 112 of the non-terrestrial (access) network 110 and/or by the respective base station entity 211, 212 of the terrestrial access network 210:
-- the user equipment 20 determines its geo location by means of a GNSS system;
-- the user equipment 20 establishes a connection with the non-terrestrial (access) network 110;
-- the user equipment 20 reports its geo GNSS location;
-- the non-terrestrial (access) network 110 knows the geo location of the user equipment 20;
-- the user equipment 20 uses the non-terrestrial (access) network 110 (i.e. roams on that network in idle and connected mode);
-- the establishment of a call will update the position of the user equipment 20 known in the non-terrestrial (access) network 110;
-- the non-terrestrial (access) network 110 network receives the connection request from the user equipment 20 incl. its current geo location (based on GNSS report);
-- the non-terrestrial (access) network 110 uses the GNSS geo location of the user equipment 20 to decide on mobility procedures back to the terrestrial network 210 (based on the coverage information 650 available to the non-terrestrial (access) network 110; especially the non-terrestrial (access) network 110 holds a coverage database of terrestrial networks 210 with its geo polygons, especially incl. frequencies, i.e. coverage parameter information 50);
-- the non-terrestrial (access) network 110 compares for the received user equipment 20 GNSS location with the coverage database to check if a terrestrial network coverage is available (i.e. it detects whether the user equipment 20 is currently located or will subsequently be located in or near the specific geographical coverage area 250);
-- the non-terrestrial (access) network 110 performs a mobility procedure like cell reselection (potentially also including ePLMN configuration) or handover for the user equipment 20 from the non-terrestrial (access) network 110 to the terrestrial network 200 under consideration of the appropriate information on TN coverage and frequency from the match between the UE geo location and the coverage database 650/600.

Aspects of the invention:
1. Aspect: Method for providing communication services to a user equipment (20) using an access network (110) of or associated with a mobile communication network (100), wherein the access network (110) is or at least comprises a part corresponding to or being a non-terrestrial network, wherein the user equipment (20) is able to be connected to or served by a base station entity (111) being part of that non-terrestrial network or that non-terrestrial network part of the access network (110),
   wherein the user equipment (20), while being located in or near a specific geographical coverage area (250), is able or has a high likelihood to be able to be connected to or to be served by at least one further base station entity (211, 212), the at least one further base station entity (211, 212) being part of a terrestrial access network (210) of or associated with a further mobile communication network (200) or of or associated with the mobile communication network (100),
   wherein coverage information (650) indicates the specific geographical coverage area (250) of the at least one further base station entity (211, 212) or of the terrestrial access network (210), the coverage information (650) comprising at least one piece of coverage parameter information (50), wherein, in order to provide communication services to the user equipment (20), the method comprises the following steps:
      -- in a first step, while the user equipment (20) being connected to or served by the base station entity (111) and the base station entity (111) having the coverage information (650), at least the coverage parameter information (50) is transmitted, by the base station entity (111), to the user equipment (20),
         the coverage information (650) and a location information (202, 203) of the user equipment (20) being used to detect whether the user equipment (20) is currently located or will subsequently be located in or near the specific geographical coverage area (250),
      -- in a second step, the user equipment (20) changes or is changed from being connected to or served by the base station entity (111) to being connected to or served by the at least one further base station entity (211, 212) or the terrestrial access network (210) using the at least one piece of coverage parameter information (50).
2. Aspect: Method according to aspect 1, wherein the coverage information (650) is obtained from a coverage information entity or functionality (600), wherein, in order to obtain the coverage information (650), the base station entity (111) retrieves the coverage information (650) from the coverage information entity or functionality (600), preferably either prior to the user equipment (20) being connected to or served by the base station entity (111), or during the user equipment (20) being connected to or served by the base station entity (111).
3. Aspect: Method according to one of the preceding aspects, wherein, especially as part of the first step, the coverage information (650) is used by the base station entity (111) or by the user equipment (20) to detect whether the user equipment (20) is currently located or will subsequently be located in or near the specific geographical coverage area (250), wherein, based on the coverage information (650), a coverage indication information (450) is
   -- determined by the base station entity (111) and transmitted to the user equipment (20), or
   -- determined by the user equipment (20),
      wherein the coverage indication information (450) comprises the indication, regarding at least one position (2, 3, 4) of the user equipment (20), whether the user equipment (20) is located in or near the specific geographical coverage area (250), wherein the coverage indication information (450) especially refers
   -- to a current position (2, 3) of the user equipment (20) and, hence, a current point in time and/or
   -- to an expected future position (3, 4) of the user equipment (20) and a future point in time,
   and wherein the coverage indication information (450) especially comprises at least one piece of coverage parameter information (50).
4. Aspect: Method according to one of the preceding aspects, wherein, especially as part of the first step, the location information (202, 203) of the user equipment (20) corresponds to a location information (202, 203) corresponding to or indicating one of the current position (2, 3) of the user equipment (20) and an expected future position (3, 4) of the user equipment (20) is either
   **--** transmitted, by the user equipment (20), to the base station entity (111) and/or the access network (110), or
   -- generated or otherwise obtained by the base station entity (111) and/or the access network (110),
      wherein the base station entity (111) determines, based on the coverage information (650), that the one of the current position (2, 3) of the user equipment (20) and the expected future position (3, 4) of the user equipment (20) corresponds to the specific geographical coverage area (250), wherein the base station entity (111) transmits, to the user equipment (20), a mobility procedure information (150), the mobility procedure information (150) especially comprising the coverage parameter information (50), wherein the mobility procedure information (150) indicates or prescribes, to the user equipment (20),
   -- to perform a cell selection operation in order to be served by the further base station entity (211) and/or
   -- to modify the equivalent public land mobile network configuration such that the further base station entity (211) serves the user equipment (20) and/or
   **--** to perform a handover operation towards the further base station entity (211).
5. Aspect: Method according to one of the preceding aspects, wherein, especially as part of the first step, the base station entity (111) transmits the coverage information (650), or a part thereof, to the user equipment (20), the coverage information (650) or part thereof indicating the specific geographical coverage area (250) of the at least one further base station entity (211, 212) or of the terrestrial access network (210),
   wherein the user equipment (20) determines, based on the coverage information (650) or part thereof, received from the base station entity (111), that one of the current position (2, 3) of the user equipment (20) and an expected future position (3, 4) of the user equipment (20) corresponds to the specific geographical coverage area (250),
   wherein the at least one piece of coverage parameter information (50) is used, by the user equipment (20), to perform a mobility operation, especially to connect to or to register with the at least one further base station entity (211, 212) or the terrestrial access network (210).
6. Aspect: User equipment (20) for being provided with communication services, using an access network (110) of or associated with a mobile communication network (100), wherein the access network (110) is or at least comprises a part corresponding to or being a non-terrestrial network, wherein the user equipment (20) is able to be connected to or served by a base station entity (111) being part of that non-terrestrial network or that non-terrestrial network part of the access network (110),
   wherein the user equipment (20), while being located in or near a specific geographical coverage area (250), is able or has a high likelihood to be able to connect to or to be served by at least one further base station entity (211, 212), the at least one further base station entity (211, 212) being part of a terrestrial access network (210) of or associated with a further mobile communication network (200) or of or associated with the mobile communication network (100),
   wherein coverage information (650) indicates the specific geographical coverage area (250) of the at least one further base station entity (211, 212) or of the terrestrial access network (210), the coverage information (650) comprising at least one piece of coverage parameter information (50),
   wherein, in order for the user equipment (20) to be provided with communication services, the user equipment (20) is configured such that:
      -- while the user equipment (20) being connected to or served by the base station entity (111) and the base station entity (111) having the coverage information (650), the user equipment (20) receives, at least the coverage parameter information (50) from the base station entity (111),
         the coverage information (650) and a location information (202, 203) of the user equipment (20) being able to be used to detect whether the user equipment (20) is currently located or will subsequently be located in or near the specific geographical coverage area (250),
      -- the user equipment (20) changes or is changed from being connected to or served by the base station entity (111) to being connected to or served by the at least one further base station entity (211, 212) or the terrestrial access network (210) using the at least one piece of coverage parameter information (50).
7. Aspect: User equipment (20) according to aspect 6, wherein the location information (202, 203) of the user equipment (20) is transmitted, by the user equipment (20), to the base station entity (111), the location information (202, 203) corresponding to or indicating one of the current position (2, 3) of the user equipment (20) and an expected future position (3, 4) of the user equipment (20), and the location information (202, 203) being transmitted in view of determining, especially based on the coverage information (650), that the one of the current position (2, 3) of the user equipment (20) and the expected future position (3, 4) of the user equipment (20) corresponds to the specific geographical coverage area (250), wherein the user equipment (20) receives, from the base station entity (111), a mobility procedure information (150), the mobility procedure information (150) especially comprising the coverage parameter information (50), the mobility procedure information (150) indicating or prescribing, to the user equipment (20),
   **--** to perform a cell selection operation in order to be served by the further base station entity (211) and/or
   -- to modify the equivalent public land mobile network configuration such that the further base station entity (211) serves the user equipment (20) and/or
   **--** to perform a handover operation towards the further base station entity (211).
8. Aspect: User equipment (20) according to aspect 6, wherein the user equipment (20) receives, from the base station entity (111), the coverage information (650), or a part thereof, the coverage information (650) or part thereof indicating the specific geographical coverage area (250) of the at least one further base station entity (211, 212) or of the terrestrial access network (210),
   wherein the user equipment (20) determines, based on the coverage information (650) or part thereof, received from the base station entity (111), that one of the current position (2, 3) of the user equipment (20) and an expected future position (3, 4) of the user equipment (20) corresponds to the specific geographical coverage area (250),
   wherein the at least one piece of coverage parameter information (50) is used, by the user equipment (20), to perform a mobility operation, especially to connect to or to register with the at least one further base station entity (211, 212) or the terrestrial access network (210).
9. Aspect: System or mobile communication network (100) for providing communication services to a user equipment (20) using an access network (110) of or associated with a mobile communication network (100), wherein the access network (110) is or at least comprises a part corresponding to or being a non-terrestrial network, wherein the user equipment (20) is able to be connected to or served by a base station entity (111) being part of that non-terrestrial network or that non-terrestrial network part of the access network (110),
   wherein the user equipment (20), while being located in or near a specific geographical coverage area (250), is able or has a high likelihood to be able to be connected to or to be served by at least one further base station entity (211, 212), the at least one further base station entity (211, 212) being part of a terrestrial access network (210) of or associated with a further mobile communication network (200) or of or associated with the mobile communication network (100),
   wherein coverage information (650) indicates the specific geographical coverage area (250) of the at least one further base station entity (211, 212) or of the terrestrial access network (210), the coverage information (650) comprising at least one piece of coverage parameter information (50),
   wherein, in order to provide communication services to the user equipment (20), the system or mobile communication network (100) is configured such that:
      -- while the user equipment (20) being connected to or served by the base station entity (111) and the base station entity (111) having the coverage information (650), at least the coverage parameter information (50) is transmitted, by the base station entity (111), to the user equipment (20), the coverage information (650) and a location information (202, 203) of the user equipment (20) being used to detect whether the user equipment (20) is currently located or will subsequently be located in or near the specific geographical coverage area (250),
      **--** the user equipment (20) changes or is changed from being connected to or served by the base station entity (111) to being connected to or served by the at least one further base station entity (211, 212) or the terrestrial access network (210) using the at least one piece of coverage parameter information (50).
10. Aspect: Coverage information entity or functionality (600) as part of or assigned to or able to be accessed by a system or a mobile communication network (100) according to aspect 9.
11. Aspect: Program comprising a computer readable program code, which, when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of aspects 1 to 5.
12. Aspect: Computer-readable medium comprising instructions which when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of aspects 1 to 5.

## Claims

1. Method for providing communication services to a user equipment (20) using an access network (110) associated with a mobile communication network (100), wherein the access network (110) is or at least comprises a part corresponding to or being a non-terrestrial network, wherein the user equipment (20) is able to be connected to or served by a base station entity (111) being part of that non-terrestrial network or that non-terrestrial network part of the access network (110),
wherein the user equipment (20), while being located in a geographical coverage area (250), is able to be connected to or to be served by at least one further base station entity (211, 212), the at least one further base station entity (211, 212) being part of a terrestrial access network (210) associated with a further mobile communication network (200) or associated with the mobile communication network (100),
wherein coverage information (650) indicates the geographical coverage area (250) of the at least one further base station entity (211, 212) or of the terrestrial access network (210), the coverage information (650) comprising at least one piece of coverage parameter information (50), wherein, in order to provide communication services to the user equipment (20), the method comprises the following steps:
-- in a first step, while the user equipment (20) being connected to or served by the base station entity (111) and the base station entity (111) having the coverage information (650),the coverage parameter information (50) as part of the coverage information (650) is transmitted, by the base station entity (111), to the user equipment (20),
the coverage parameter information (50) and a location information (202, 203) of the user equipment (20) being used to detect whether the user equipment (20) is located in the geographical coverage area (250),
-**-** in a second step, the user equipment (20) changes or is changed from being connected to or served by the base station entity (111) to being connected to or served by the at least one further base station entity (211, 212) or the terrestrial access network (210) using the at least one piece of coverage parameter information (50).

2. Method according to claim 1, wherein the coverage information (650) is obtained from a coverage information entity or functionality (600), wherein, in order to obtain the coverage information (650), the base station entity (111) retrieves the coverage information (650) from the coverage information entity or functionality (600), preferably either prior to the user equipment (20) being connected to or served by the base station entity (111), or during the user equipment (20) being connected to or served by the base station entity (111).

3. Method according to one of the preceding claims, wherein, especially as part of the first step, the coverage information (650) is used by the base station entity (111) or by the user equipment (20) to detect whether the user equipment (20) is located in the geographical coverage area (250), wherein, based on the coverage information (650), a coverage indication information (450) is
-- determined by the base station entity (111) and transmitted to the user equipment (20), or
-- determined by the user equipment (20),
wherein the coverage indication information (450) comprises the indication, regarding at least one position (2, 3, 4) of the user equipment (20), whether the user equipment (20) is located in or near the geographical coverage area (250), wherein the coverage indication information (450) especially refers
-**-** to a current position (2, 3) of the user equipment (20) and, hence, a current point in time and/or
-- to an expected future position (3, 4) of the user equipment (20) and a future point in time,
and wherein the coverage indication information (450) especially comprises at least one piece of coverage parameter information (50).

4. Method according to one of the preceding claims, wherein, as part of the first step, the base station entity (111) transmits the coverage information (650), or a part thereof, to the user equipment (20), the coverage information (650) or part thereof indicating the geographical coverage area (250) of the at least one further base station entity (211, 212) or of the terrestrial access network (210), wherein the user equipment (20) determines, based on the coverage information (650) or part thereof, received from the base station entity (111), that the current position (2, 3) of the user equipment (20) corresponds to the geographical coverage area (250),
wherein the at least one piece of coverage parameter information (50) is used, by the user equipment (20), to perform a mobility operation, especially to connect to or to register with the at least one further base station entity (211, 212) or the terrestrial access network (210).

5. User equipment (20) for being provided with communication services, using an access network (110) associated with a mobile communication network (100), wherein the access network (110) is or at least comprises a part corresponding to or being a non-terrestrial network, wherein the user equipment (20) is able to be connected to or served by a base station entity (111) being part of that non-terrestrial network or that non-terrestrial network part of the access network (110),
wherein the user equipment (20), while being located in a geographical coverage area (250), is able to connect to or to be served by at least one further base station entity (211, 212), the at least one further base station entity (211, 212) being part of a terrestrial access network (210) associated with a further mobile communication network (200) or associated with the mobile communication network (100),
wherein coverage information (650) indicates the geographical coverage area (250) of the at least one further base station entity (211, 212) or of the terrestrial access network (210), the coverage information (650) comprising at least one piece of coverage parameter information (50), wherein, in order for the user equipment (20) to be provided with communication services, the user equipment (20) is configured such that:
-- while the user equipment (20) being connected to or served by the base station entity (111) and the base station entity (111) having the coverage information (650), the user equipment (20) receives, the coverage parameter information (50) as part of the coverage information (650) from the base station entity (111),
the coverage parameter information (50) and a location information (202, 203) of the user equipment (20) being able to be used to detect whether the user equipment (20) is located in the geographical coverage area (250),
-**-** the user equipment (20) changes or is changed from being connected to or served by the base station entity (111) to being connected to or served by the at least one further base station entity (211, 212) or the terrestrial access network (210) using the at least one piece of coverage parameter information (50).

6. User equipment (20) according to claim 6, wherein the user equipment (20) receives, from the base station entity (111), the coverage information (650), or a part thereof, the coverage information (650) or part thereof indicating the geographical coverage area (250) of the at least one further base station entity (211, 212) or of the terrestrial access network (210),
wherein the user equipment (20) determines, based on the coverage information (650) or part thereof, received from the base station entity (111), that the current position (2, 3) of the user equipment (20) corresponds to the geographical coverage area (250),
wherein the at least one piece of coverage parameter information (50) is used, by the user equipment (20), to perform a mobility operation, especially to connect to or to register with the at least one further base station entity (211, 212) or the terrestrial access network (210).

7. System or mobile communication network (100) for providing communication services to a user equipment (20) using an access network (110) associated with a mobile communication network (100), wherein the access network (110) is or at least comprises a part corresponding to or being a non-terrestrial network, wherein the user equipment (20) is able to be connected to or served by a base station entity (111) being part of that non-terrestrial network or that non-terrestrial network part of the access network (110),
wherein the user equipment (20), while being located in a geographical coverage area (250), is able to be connected to or to be served by at least one further base station entity (211, 212), the at least one further base station entity (211, 212) being part of a terrestrial access network (210) associated with a further mobile communication network (200) or associated with the mobile communication network (100),
wherein coverage information (650) indicates the geographical coverage area (250) of the at least one further base station entity (211, 212) or of the terrestrial access network (210), the coverage information (650) comprising at least one piece of coverage parameter information (50), wherein, in order to provide communication services to the user equipment (20), the system or mobile communication network (100) is configured such that:
-- while the user equipment (20) being connected to or served by the base station entity (111) and the base station entity (111) having the coverage information (650), the coverage parameter information (50) as part of the coverage information (650) is transmitted, by the base station entity (111), to the user equipment (20),
the coverage parameter information (50) and a location information (202, 203) of the user equipment (20) being used to detect whether the user equipment (20) is located in the geographical coverage area (250),
-**-** the user equipment (20) changes or is changed from being connected to or served by the base station entity (111) to being connected to or served by the at least one further base station entity (211, 212) or the terrestrial access network (210) using the at least one piece of coverage parameter information (50).

8. Coverage information entity or functionality (600) as part of or assigned to or able to be accessed by a system or a mobile communication network (100) according to claim 7.

9. Program comprising a computer readable program code, which, when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 4.

10. Computer-readable medium comprising instructions which when executed on a computer and/or on a user equipment (20) and/or on a network node of a mobile communication network (100), or in part on a user equipment (20) and/or in part on network node of a mobile communication network (100), causes the computer and/or the user equipment (20) and/or the network node of the mobile communication network (100) to perform a method according one of claims 1 to 4
